(19) Europäisches Patentamt
European Patent Office
Office européen des brevets

(11) EP 2 276 190 A1

(12) **EUROPÄISCHE PATENTANMELDUNG**

(43) Veröffentlichungstag:
**19.01.2011 Patentblatt 2011/03**

(21) Anmeldenummer: **10007298.2**

(22) Anmeldetag: **15.07.2010**

(51) Int Cl.:
***H04J 13/00*** *(2011.01)* ***H04L 25/03*** *(2006.01)*
***H04L 27/20*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **17.07.2009 DE 102009033788**

(71) Anmelder:
- **Astrium GmbH**
  **82024 Taufkirchen (DE)**
- **IFEN GmbH**
  **85536 Poing (DE)**

(72) Erfinder:
- **Balbach, Oliver**
  **80809 München (DE)**
- **Floch, Jean-Jacques**
  **81677 München (DE)**
- **Schmitz-Peiffer, Andreas, Dr.**
  **80797 München (DE)**

(74) Vertreter: **Avenhaus, Beate**
**EADS Deutschland GmbH**
**Patentabteilung**
**81663 München (DE)**

(54) **Verfahren zum Empfangen eines Signals und Empfänger**

(57) Die Erfindung betrifft Verfahren zum Empfangen eines GMSK-modulierten Signals, das zur Übertragung von zwei Diensten gleichzeitig ein Inphasen-Signal mit einem vom Quadraturphasen-Signal unterschiedlichem Pseudozufallscode aufweist. Durch ein Dekompositionsfilter in einem Referenzsignalzweig wird beim Korrelieren mit dem empfangenen Signal ein Dienst unabhängig von dem anderen detektiert.

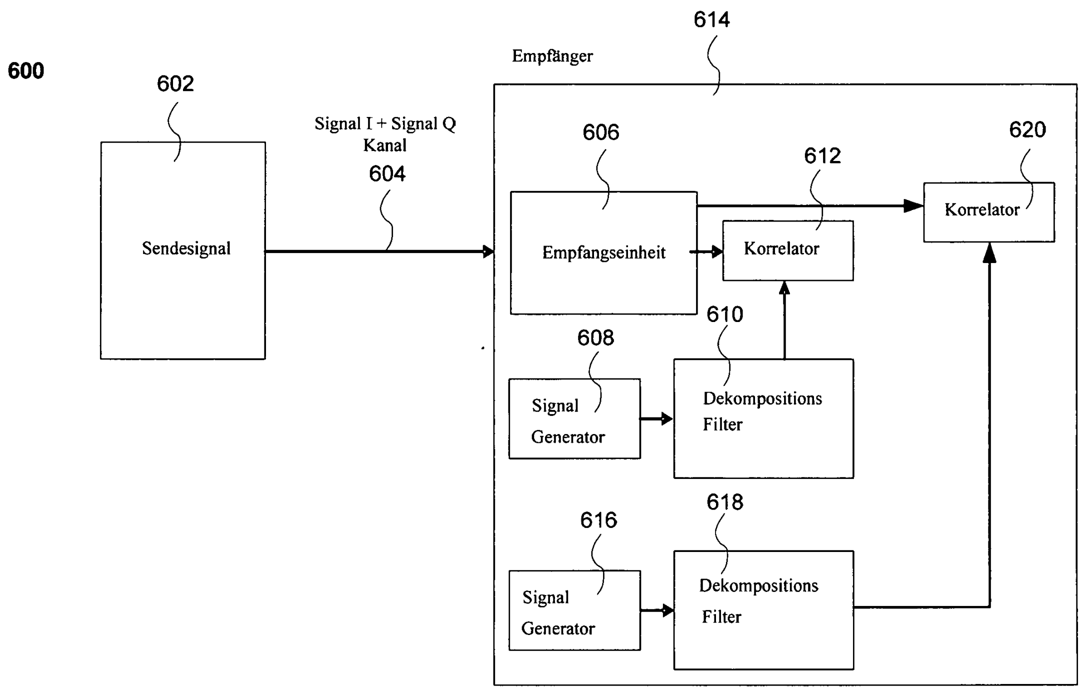


FIG 6

EP 2 276 190 A1

## Beschreibung

Die Erfindung betrifft ein Verfahren zum Empfangen eines phasenkontinuierlichen Signals und einen Empfänger.

Ausführungsbeispiele der Erfindung sind in den Figuren dargestellt und werden im Folgenden näher erläutert.

Es zeigen

| | |
|---|---|
| FIG. 1 | ein BOC (Binary Offset Code) - Signal |
| FIG. 2A- 2C | Laurent-Kurven gemäß einem Ausführungsbeispiel der Erfindung, |
| FIG. 3A- 3C | Quantisierungseffekte gemäß einem Ausführungsbeispiel der Erfindung |
| FIG. 4 | Mehrwegsignale gemäß einem Ausführungsbeispiel der Erfindung, |
| FIG. 5 | eine Empfängerarchitektur gemäß einem Ausführungsbeispiel der Erfindung |
| FIG. 6 | eine weitere Empfängerarchitektur gemäß einem Ausführungsbeispiel der Erfindung. |

Einer der vielversprechendsten Modulationsarten, um Signale wie z.B. Kommunikationssignale oder Navigationssignale innerhalb einer eingeschränkten Bandbreite ohne Interferenzen mit den benachbarten Bändern zu übertragen, ist GMSK (Gaussian Minimum Shift Keying).

Vorteile dieses Modulationsschemas im Vergleich zu einigen anderen Signalen sind:

- Verbesserte spektrale Effizienz im Vergleich zu anderen Umtast-Modulationsverfahren
- Konstante Umhüllende. Hierdurch werden die Störungen aufgrund des Gebrauches von nicht-linearen Verstärkern begrenzt.

GMSK wird zurzeit hauptsächlich in Funkkommunikationssystemen, wie z.B. dem zellulären GSM (Global System for Mobile Communications), verwendet.

Bisher verwenden keine Navigationssignale die GMSK-Modulation. Daher gibt es bisher auch keine Navigationsempfänger, die auf diesem Modulationsschema basieren. Die Erfindung kann jedoch auch auf Kommunikationssignale angewandt werden.

Unter Navigationssignalen werden Signale verstanden, die von festen oder beweglichen Sendern ausgesendet werden und dazu dienen, in entsprechenden Empfängern zumindest eine Positionsbestimmung zu ermöglichen. Die Positionsbestimmung erfolgt hierbei nicht durch eine Peilung, d.h. Richtungsbestimmung aus z.B. der richtungsabhängigen Signalstärke des einfallenden Signals, sondern durch eine Laufzeitbestimmung eines Signals. Geeignet hierzu sind z.B. CDMA-Signale, die eine Korrelation mit einem empfängergenerierten Vergleichssignal erlauben. CDMA - basierte Navigationssignale zeichnen sich insbesondere durch einen zugrundeliegenen PRN (Pseudo Random Noise)-Code aus und durch im Vergleich zu Kommunikationssignalen niedrige Datenrate (beispielsweise 0 bit/s für Pilotkanäle bis beispielsweise 1000 bit/s für Datenkanäle). Gängige Navigationssysteme verwenden eine Datenrate von 50 bit/s.

Der PRN Code wird hierbei im einfachsten Fall mit den Datenbits multipliziert. Es gibt jedoch auch die Möglichkeit, den PRN-Code bzw. die Datenbits mit einem weiteren Träger, im Folgenden Unterträger genannt, zu multiplizieren. Dieser Unterträger kann z.B. ein unmoduliertes Rechtecksignal sein. Ein solcher Unterträger kann z.B. ein so genanntes BOC (Binary Offset Carrier) - Signal oder ein BCS (Binary Coded Signal) -Signal sein. Das BOC-Signal wird weiter unten anhand FIG.1 genauer erklärt.

Durch den Unterträger wird das Frequenzspektrum in der zur Verfügung stehenden Bandbreite besser ausgenutzt, da entsprechend der Frequenz des Unterträgers das Spektrum von der sonst stark genutzten Mitte an die sonst nur schwach genutzten Ränder des Frequenzbandes verschoben werden und somit das Frequenzband bis an die Ränder gleichmäßiger ausgenutzt wird.

Unter Dienst wird in dieser Erfindung die Übertragung eines Signals verstanden, wobei das physikalische Signal selbst und/oder der Inhalt der auf das physikalische Signal modulierten Signale nur für eine Anwendung und/oder für eine Benutzergruppe empfangbar ist. Eine Anwendung ist z.B. eine kommerzielle Anwendung für präzise Navigation. Eine Benutzergruppe kann eingeschränkt oder geschlossen sein, wie z.B. kommerzielle Nutzer oder Sicherheitsbehörden; sie kann aber auch öffentlich sein.

Während die Codes für die freien Signale öffentlich bekannt sind, werden die Codes der nicht-freien Signale je nach Anwendung (kommerziell, Sicherheitsdienste, etc.) mehr oder weniger strikt geheim gehalten.

Müsste der Empfänger die Signale des nicht-freien Dienstes kennen, bestünde ein Risiko, dass diese Codes in den Besitz von nicht-berechtigten Personen gelangen. Somit besteht auch aus diesem Grund ein großes Interesse daran, dass die Dienste unabhängig voneinander empfangen werden können.

Der Dienst kann z.B. ein aufgrund physikalischer Eigenschaften des Kanals oder aufgrund der digitalen Signalstruktur genaueres Positionssignal enthalten oder zusätzliche Informationen, wie z.B. zusätzliche Integritäts-, Iono-

sphären-, Troposphäreninformationen enthalten.

Aus Sicht eines Senders auf einem Satelliten ist es wünschenswert, mit möglichst wenigen Ressourcen möglichst viele Dienste auszustrahlen. So können z.B. auf einem komplexen GMSK-Kanal 2 Dienste übertragen werden, die jeweils einen CDMA-code (bzw. PRN-code) verwenden.

Ein Nutzerempfänger kann nun einer Benutzergruppe angepasst werden, indem er von vornherein nur die Signale dieser Benutzergruppe verarbeitet und somit weniger komplex wird, wodurch positive Auswirkungen erreicht werden, wie z.B. geringerer Preis, geringere Leistungsaufnahme, geringeres Gewicht, etc.

Werden verschiedene Dienste über einen Kanal übertragen, ist es daher erstrebenswert, den Empfänger derart zu gestalten, dass nur die Signale des einen, gewünschten Dienstes verarbeitet werden müssen.

In dieser Erfindung werden insbesondere Anwendungen, die CDMA (Code Division Multiple Access) als Kanalzugriffsmethode benutzen, betrachtet. Beispielsweise wird ein GMSK-moduliertes CDMA-Navigationssignal betrachtet, über das zwei Dienste gleichzeitig übertragen werden. Um zwei Dienste gleichzeitig zu übertragen, kann das Signal als komplexes Signal generiert werden. Ein komplexes Signal zeichnet sich dadurch aus, dass es durch zwei um 90° phasenverschobene Teilsignale, die somit orthogonale und damit unabhängig voneinander sind, dargestellt und entsprechend auch implementiert werden kann. Das komplexe Signal kann in einen I-Zweig (auch I-Kanal oder In-Phase-Kanal genannt) und einen Q-Zweig (auch Q-Kanal oder Quadraturkanal genannt) aufgesplittet werden, wobei das Ziel ist, den Eingangsdatenstrom so zu teilen, dass die Daten des einen Dienstes auf dem einen Kanal (z.B. I-Kanal) übertragen werden und die Daten des anderen Dienstes auf dem anderen Kanal (z.B. Q-Kanal). Hierzu wird der Eingangsdatenstrom abwechselnd aus einem Datenbit des ersten Dienstes und einem Datenbit des zweiten Dienstes gebildet.

Im Gegensatz zu OQPSK (Offset Quadrature Phase Shift Keying) ist aufgrund der ICCI (Inter Code Chip Interference, Zwischen-Code-Chip-Interferenz) für GMSK eine voneinander unabhängige Erzeugung der PRN (Pseudo Random Noise)-Kodes der In-Phasen- und Quadratur-Phasenkanäle nicht möglich. OQPSK ist jedoch aufgrund der schlechteren spektralen Eigenschaften nicht als Lösung geeignet.

Es besteht somit ein Vertraulichkeitsproblem, wenn zwei unabhängige Dienste über den I- und den Q-Kanal gesendet werden, weil, um einen von den zwei Diensten zu empfangen, der PRN Code des jeweiligen anderen Dienstes im Empfänger bekannt sein muss.

Z.B. wird ein kommerzieller Dienst dadurch erreicht, dass der PRN-Code nicht öffentlich bekannt, bzw. verschlüsselt ist. Soll z.B. mit dem Navigationssignal ein öffentlicher und ein kommerzieller Dienst gleichzeitig übertragen werden, müssten gemäß dem Stand der Technik aber beide Codes im Empfänger bekannt sein, um das Signal zu dekodieren, da eine Trennung des Signals durch die Inter-Code-Chip-Interferenzen nicht möglich ist. Die Inter-Code-Chip-Interferenzen in den benachbarten Chips stammen von dem jeweilig anderen Code und müssen beim Korrelieren durch Nachbildung dieses anderen Codes berücksichtigt werden.

Auch wenn der Empfänger den kommerziellen Dienst nicht anbietet, müsste der Empfängerhersteller den kommerziellen Code wissen und diesen im Empfänger implementieren. Somit besteht das Risiko, dass der kommerzielle Code in unberechtigte Hände gelangt.

Eine Methode gemäß dem Stand der Technik, um das Problem der I-Q Aufspaltung zu lösen, ist die Verwendung der sogenannten Precoding (Vor-Kodierungs-) Technik, die auch in vielen Kommunikationssystemen angewandt wird. Bei der Verwendung der Precoding-Technik erhält die Ausgangssignalpolarität das gleiche Vorzeichen wie der binäre PRN-Code des Eingangssignals. Hierbei kann der Empfänger das hereinkommende Signal mit seinem lokal generierten binären PRN-Code korrelieren.

Es gibt drei Hauptnachteile der Precoding-Technik:

- Komplexeres Transmitterdesign
- Leistungsverlust am Empfänger
- Erhöhung der Komplexität, um die unvermeidbare Kodeverzögerung zwischen dem hereinkommenden RF-Signal und dem lokal generierten binären PRN-Kode zu kompensieren. Eine der BPSK vergleichbare Performance ist nur erreichbar, wenn die Kodeverzögerung und der Phasenfehler Null sind.

Hierbei ist anzumerken, dass die Übertragung in Kommunikationssystemen nach dem Stand der Technik nicht die Übertragung zweier verschiedener, unabhängiger Dienste betrifft, sondern vielmehr die Übertragung eines Eingangsdatenstroms (eines "Dienstes"), wobei es dort darauf ankommt, den Datenstrom dieses Dienstes mit einer hohen Datenrate zu übertragen.

Aufgabe der Erfindung ist es, eine Empfänger-Architektur bereitzustellen, mit der zwei Dienste, die als ein GMSK Navigationssignal übertragen werden, unabhängig voneinander zu empfangen.

Die Aufgabe wird durch ein Verfahren gemäß Patentanspruch 1 gelöst. Die Aufgabe wird weiterhin durch einen Empfänger gemäß Patentanspruch 11 gelöst.

Um die PRN Codes unabhängig voneinander generieren zu können, wird erfindungsgemäß die Laurent-Dekomposition auf die komplexe Umhüllende des GMSK-Signals angewandt.

Die Verwendung der Laurent-Dekomposition ermöglicht eine Basisband-Navigationsempfängerarchitektur, bei der die PRN Codes unabhängig voneinander in einem In-Phasen-Kanal (I-Kanal) bzw. in einem Quadratur-Kanal (Q-Kanal) erzeugt werden können.

Das Prinzip ist hierbei, für den auf den I- oder Q-Kanal übertragenen Service den C0-Filter, der aus der Laurent-Dekompositionsformel errechnet wurde, zu benutzen und ihn auf den gewünschten PRN-Code anzuwenden, um das Referenzsignal zu formen, das benutzt wird, um das übertragene CDMA-Signal zu korrelieren. Das Referenzsignal kann entweder in einem Speicher gespeichert werden oder es kann in Echtzeit generiert werden.

Die übliche Weise, die GMSK-Modulation zu definieren, ist sie als MSK-Modulation mit einem Tiefpass Gauss'schen Filter zu definieren.

Eine weitere Weise, das übertragene Basisband-GMSK basierend über eine Periode zu definieren ist, die Laurent-Dekomposition zu verwenden. In diesem Fall gilt:

$$s_{\mathrm{Re}f} \approx A\sum_{n=1}^{L}\left[a_n \cdot C_0\left(t-nT_c\right)-b_n a_n b_{n-1}\cdot C_1\left(t-nT_c-\frac{T_c}{2}\right)\right]+$$
$$jA\sum_{n=1}^{L}\left[b_n \cdot C_0\left(t-nT_c-\frac{T_c}{2}\right)-a_n b_{n-1} a_{n-1}\cdot C_1\left(t-nT_c\right)\right]$$

Wobei

A ... Signalamplitude

Für eine BPSK Signalform:

$a_n$ ... n-te PRN-Chip des Signals, das über den BPSK-In-Phasen-Kanal wird.
$b_n$ ... n-te PRN-Chip des Signals, das über den BPSK-Quadratur-Phasen-Kanal wird.
L ... PRN Codelänge
$T_c$ .... Chip-Periode

Für ein $BOC_s$ (m,n) (Binary Offset Carrier Sinus mit m = Unterträgerrate und n = Chiprate) oder $BOC_c$ (m,n) (Binary Offset Carrier Cosinus) wird die Signalform in die Codesequenz eingefügt.

**FIG.1** illustriert den Wert von $a_n$ im Falle von $BOC_s$ oder $BOC_c$.

Der gleiche Ansatz gilt für den PRN Code bn.

Für $BOC_s$ ist die PRN Codelänge $L \cdot \frac{n}{2m}$ , und Tc repräsentiert die Unterchip-Länge $(T_{chipperiod} \frac{n}{2m})$, wobei *L* die Anzahl an Unterträger-Chips während einer PRN Codeperiode und $T_{chipperiod}$ die Länge eines PRN-Chips darstellt.

Für $BOC_c$ ist die PRN-Codelänge $L \cdot \frac{n}{4m}$ , und Tc repräsentiert die Unterchip-Länge $(T_{chipperiod} \frac{n}{4m})$.

C0 und C1 werden in den **FIG.2A -2C** für die folgenden BT-Produkte dargestellt: BTc = 0,5, BTc = 0,3 und BTc =0,25.

Die Basisband-Navigationsempfänger-Architektur basierend auf der Laurent-Dekomposition der komplexen Hülle des GMSK-Signals ist fähig, unabhängig die PRN Codes des In-Phasen und des Quadratur-Phasen-Kanals zu generieren.

Das Prinzip ist hierbei, für den auf den I- oder Q-Kanal übertragenen Service den C0-Filter, der aus der Laurent-Dekompositionsformel errechnet wurde, zu benutzen und ihn auf den gewünschten PRN-Code anzuwenden, um das Referenzsignal zu formen, das benutzt wird, um das übertragene CDMA-Signal zu korrelieren.

Das Architekturdesign basiert auf dem folgenden Signal:

$$s_{\mathrm{Re}ceiver} = \sum_{n=1}^{L} \left[ a_n \cdot C_0 \left( t - nT_c \right) \right]$$

Um lediglich den Q-Kanal zu empfangen, generiert der Empfänger das folgende Signal:

$$s_{\mathrm{Re}ceiver} = jA \sum_{n=1}^{L} \left[ b_n \cdot C_0 \left( t - nT_c - \frac{T_c}{2} \right) \right]$$

Um den Q-Kanal und den I-Kanal zu empfangen, generiert der Empfänger das folgende Signal:

$$s_{\mathrm{Re}ceiver} = \sum_{n=1}^{L} \left[ a_n \cdot C_0 \left( t - nT_c \right) \right] + jA \sum_{n=1}^{L} \left[ b_n \cdot C_0 \left( t - nT_c - \frac{T_c}{2} \right) \right]$$

Um die Signalperformance in einer Mehrwegumgebung zu verbessern, wird das Filter C0 mit 2 Bit quantisiert (ein Bit für die Größe und ein Bit für das Vorzeichen).

Diese Architektur ist sehr einfach auszuführen. Sie verbessert die Performance in einer Mehrwegumgebung und stellt eine strikte Trennung in I- und Q-Phase zur Verfügung, so dass ein einzelner Service für den Nutzer verfügbar ist.

Gemäß einer Ausführungsform der Erfindung wird ein Verfahren zum Empfangen eines Signals bereitgestellt, wobei das Signal komplex und phasenkontinuierlich moduliert ist und mit einem empfängergenerierten Signal korreliert wird. Dem empfangenen Signal wie auch dem empfängergenerierten liegen ein Pseudo-Zufallscode zugrunde. Die Erzeugung des empfängergenerierten Signals weist hierbei die Schritte des Erzeugens der Pseudo-Zufallscodefolge und des Filterns des Signals mit einem Dekompositionsfilter auf. Anstelle des Dekompositionsfilter wären auch andere Filter wie zum Beispiel Nyquist Filter, angepasster Filter (Matched filter), Gauss-Filter usw. möglich.

Gemäß einer Ausführungsform der Erfindung ist das Dekompositionsfilter ein Laurent-Dekompositionsfilter, und es wird nur die Hauptkomponente des Laurent-Dekompositionsfilters verwendet. Eine Verwendung weiterer Komponenten wäre zwar auch möglich, diese sind für die Performance aber vernachlässigbar und würden die Komplexität des Empfängers unnötig erhöhen. Durch die Verwendung nur der Hauptkomponente ist der getrennte Empfang eines einzelnen Dienstes möglich, wenn auf dem empfangenen Signal zwei unabhängige Dienste übertragen werden. Durch die Verwendung höherer Laurent-Komponenten würde der unabhängige Empfang dieser zwei Dienste nicht mehr möglich sein.

Gemäß einer Ausführungsform der Erfindung wird das empfangene Signal aus einem analogen Signal erzeugt, das mit einem oder mehreren Bits abgetastet wird.

Gemäß einer Ausführungsform der Erfindung Verfahren wird das empfängergenerierte Signal mit einem oder mehreren Bits quantisiert. Durch die Quantisierung wird die Korrelationsfunktion spitzer, wodurch der Fehler durch die Mehrwegeausbreitung verkleinert wird und die Komplexität des Empfängers verringert wird.

Gemäß einer Ausführungsform der Erfindung umfasst das empfangene Signal zwei voneinander unabhängige Pseudo-Zufallscodes. Das empfängergenerierte Signal umfasst ebenfalls einen der beiden Pseudo-Zufallscodes und wird entweder im Inphasenkanal oder Quadraturkanal gefiltert.

Das gefilterte Signal wird schließlich mit dem empfangenen Signal korreliert. Somit wird durch die Korrelation genau einer der beiden Dienste, die in dem empfangenen Signal enthalten sind, detektiert, ohne dass der Pseudozufallscode des anderen Dienstes bekannt sein muss.

Gemäß einer Ausführungsform der Erfindung umfasst das empfangene Signal einen ersten Pseudo-Zufallscode-Code und einen vom ersten Pseudo-Zufallscode-Code unabhängigen zweiten Pseudo-Zufallscode-Code. Weiterhin generiert der Empfänger zusätzlich ein zweites Signal, das einen zweiten Pseudo-Zufallscode umfasst, wobei der empfängergenerierte erste und der zweite Pseudo-Zufallscode unabhängig voneinander generiert werden. Der erste Pseudo-Zufallscode-Code wird im Inphasenkanal durch ein erstes Dekompositionsfilter gefiltert, während Der zweite Pseudo-Zufallscode-Code im Quadraturkanal durch ein zweites Dekompositionsfilter gefiltert wird. Der gefilterte erste Pseudo-Zufallscode wird mit dem empfangenen Signal korreliert und der gefilterte zweite Pseudo-Zufallscode wird mit dem empfangenen Signal korreliert.

Hierdurch wird eine zweite Linie eines empfängergenerierten Signals hinzugefügt, die schließlich ein zweites empfängergeniertes Signal erzeugt, das den Pseudozufallscode des zweiten Dienstes enthält. Somit kann auch der zweite Dienst unabhängig vom ersten Dienst empfangen werden. Der zweite Dienst kann auf diese Weise gleichzeitig mit dem ersten Dienst empfangen bzw. detektiert werden. Es ist auch möglich, zwischen den Diensten umzuschalten bzw. je nach Bedarf einen der beiden Dienste auszuschalten.

Gemäß einer Ausführungsform der Erfindung wird der Pseudo-Zufallscode mit einem Unterträger moduliert. Ebenso kann der empfängergenerierte Pseudo-Zufallscode kann mit dem Unterträger moduliert werden. Der Unterträger kann z.B. ein gegenüber dem Pseudo-Zufallscode gleichratiges oder höherratiges Rechtecksignal, wie z.B. ein BOC-Signal oder ein BCS-Signal sein. Selbstverständlich sind hier auch andere Signalformen möglich.

Gemäß einer Ausführungsform der Erfindung ist das empfangene phasenkontinuierliche Signal ein GMSK-Signal, das mit Datenbits moduliert wird. Genauer gesagt wird, wie dem Fachmann bekannt ist, der Pseudozufallscode mit den Datenbits und eventuell mit einem Unterträger multipliziert und die somit entstehende Bitfolge GMSK-gefiltert.

Das empfangene Signal kann beispielsweise zu einer der folgenden Signalgruppen zugeordnet werden:

Navigationssignal, Kommunikationssignal, Fernsehsignal, Radiosignal, usw. Auf diesen Signalen werden gemäß einer Ausführungsform der Erfindung jeweils zwei Dienste wie bereits oben erläutert übertragen. Diese Dienste können beispielsweise freie Dienste, wie z.B. freie Fernsehprogramme, kommerzielle Dienste, wie z.B. Bezahlfernsehen, sicherheitsrelevante Dienste, usw., sein. Auch jegliche Mischung dieser Dienstarten ist möglich, z.B. wäre es möglich, auf einem Kanal, wie z.B. dem Inphase-Kanal ein Programm mit normaler Qualität frei zu empfangen und auf dem Q-Kanal das gleiche Programm in HDTV (High Definition Television) als bezahltes Programm zu empfangen. Es wäre auch möglich, dass der Nutzer auf den HDTV-Programm umschalten kann und nur dann dafür bezahlt, wenn er dieses Programm in hoher Qualität anschaut.

Gemäß einer Ausführungsform der Erfindung wird das empfängergenerierte Signal aus in einem Speicher abgelegten, vordefinierten Werten erzeugt. Das heißt, dass das Signal nicht in Echtzeit erzeugt wird, sondern als bereits in einem Speicher abgelegte Werte vorliegt. Dies vereinfacht das Empfängerdesign, ermöglicht eine einfache Änderung der Signale und erlaubt eine schnelle Prozessierung. Es wäre auch denkbar, dass durch das Verfahren für das gesamte empfängergenerierte Signal Werte erzeugt werden, die in einem Speicher abgelegt werden können und direkt mit dem empfangenen Signal korreliert werden können. Dann sind im Empfänger schließlich statt dem Signalgenerierungszweig lediglich ein oder mehrere Speicher notwendig, aus denen diese Werte abgerufen werden können.

Gemäß einer Ausführungsform der Erfindung wird, wie in FIG.6 dargestellt, ein Empfänger 614 zum Empfangen von phasenkontinuierlichen Signalen 604 bereitgestellt, wobei das Empfangssignal 604 auf zwei unabhängigen Eingangssignalen basiert, wobei das erste Eingangssignal ein Inphasesignal und das zweite Eingangssignal ein Quadratursignal ist. Die Eingangssignale umfassen jeweils einen Pseudo-Zufallscode. Der Empfänger 614 weist eine Empfangseinheit 606 auf, um das Empfangssignal 604 zu empfangen und einen ersten Signalgenerator 608, der ein erstes Pseudo-Zufallscodesignal entsprechend einem ersten der beiden Pseudo-Zufallscodes des Empfangssignals erzeugt. Gemäß dieser Ausführungsform weist der Empfänger 614 einen ersten Dekompositionsfilter 610 auf, der das erzeugte erste Pseudo-Zufallscodesignal filtert und eine erste Korrelatoreinheit 612, um das gefilterte erste Pseudo-Zufallscodesignal mit dem Empfangssignal 604 zu korrelieren.

Hierdurch kann der Empfänger 614 einen Dienst aus den beiden Diensten, die auf dem Empfangssignal übertragen werden, detektieren.

Für den Empfänger gelten analog die Erläuterungen zu dem oben beschriebenen Verfahren.

Gemäß einer Ausführungsform der Erfindung weist der Empfänger 614 einen zweiten Signalgenerator 616 auf, der ein zweites Pseudo-Zufallscodesignal entsprechend dem zweiten der beiden Pseudo-Zufallscodes des Empfangssignals erzeugt. Der Empfänger weist weiterhin einen zweiten Dekompositionsfilter 618 auf, der das erzeugte zweite Pseudo-Zufallscodesignal filtert. Der Empfänger 614 weist ferner eine zweite Korrelatoreinheit 620 auf, um das gefilterte zweite Pseudo-Zufallscodesignal mit dem Empfangssignal 604 zu korrelieren.

Hierdurch kann der Empfänger 614 beide Dienste, die mit dem Empfangssignal 604 übertragen werden gleichzeitig oder selektiv empfangen und detektieren.

Gemäß einer Ausführungsform der Erfindung umfasst die Korrelatoreinheit 612 bzw. 620 mindestens einen der folgenden Korrelatorarten:

- einen Früh-Spät (Early-Late) - Korrelator
- einen Delta-Korrelator
- einen Multi-Korrelator

Unter Multi-Korrelator wird hierbei auch z.B. ein Korrelator verstanden, der nur das pünktliche Signal detektiert oder auch z.B. ein Korrelator der n früh- und n spät-Zweige aufweist.

Gemäß einer Ausführungsform der Erfindung umfasst der Signalgenerator 608 bzw. 616 mindestens einen Speicher, der vordefinierte Signalwerte enthält.

Gemäß einer Ausführungsform der Erfindung weist der Empfänger 614 eine Quantisierungseinheit auf, um das empfangene Signal mit einem oder mehreren Bits zu quantisieren und/oder eine Quantisierungseinheit aufweist, um das empfängergenerierte Signal mit einem oder mehreren Bits zu quantisieren.

Die Erfindung wird im Folgenden anhand eines Ausführungsbeispiels erläutert.

Die Empfängerarchitektur, die in **FIG.5** gezeigt wird, hat die Fähigkeit, sowohl den I-als auch den Q-Kanal zu empfangen. Um das Referenzsignal auf dem I-Kanal zu empfangen, muss nur der Pfad 502, 508, 510, 512, 518 implementiert werden.

Sobald das Referenzsignal erzeugt wurde, kann es zum Korrelieren des Signals vom Transmitter benutzt werden. Somit kann jeder Empfänger, der Korrelationsfunktionen verwendet, diesen Ansatz benutzen, um die GMSK-Signale zu empfangen.

Die Korrelationsfunktion eines GMSK-Signals, das mit PRN-Codes moduliert wurde, ist nicht so "scharf" wie die entsprechenden BPSK (Binary Phase Shift Keying)-Signale. Aus diesem Grund weist die Korrelationsfunktion eine schlechtere Performance in einer Mehrwegumgebung auf. Eine einfache Art, um die Performance zu verbessern, ist, ein 2-Bit quantisiertes Referenzsignal für das Filter C0 zu verwenden.

Um die Korrelation zu schärfen, wird das Filter C0 (516 bzw. 518) mit zwei Bits während der Abtastung 512 bzw. 514 quantisiert (ein Bit für die Größe, ein Bit für das Vorzeichen), wobei die Implementierung darüber hinaus vereinfacht wird. FIG.3A zeigt dieses quantisierte Signal.

Auf diese Weise werden die Performances in einer Mehrwegumgebung verbessert. **FIG.3B** zeigt die Kreuzkorrelationsfunktion (Cross Correlation Function CCF) eines BPSK 10 GMSK (BTc = 3) - Signals von einem Transmitter, das mit einem entsprechenden Empfänger-Referenzsignal korreliert wurde unter Verwendung von

- dem genau übertragenem Signal mit C0 und C1 ohne Quantisierung
- dem Signal mit nur C0 ohne Quantisierung
- Dem Signal mit nur C0 mit 2 Bit Quantisierung

Der Leistungsverlust aufgrund der Verwendung nur von C0 ohne Quantisierung beträgt weniger als 0,1 dB und weniger als 0,7 dB, wenn C0 mit 2 Bit Quantisierung verwendet wird.

**FIG. 3C** zeigt ein Beispiel einer Kode-Verfolgung (code tracking) eines BPSK 10 GMSK (BTc = 0,3) - Signals in einer AWGN (Additive White Gaussian Noise, überlagertes weißes Gauss'sches Rauschen) - Umgebung mit einem Früh-Spät-Abstand (Early-Late spacing) von 0,5 Chip. Es zeigt, dass die Erzeugung des Signals, wie es in dieser Erfindung vorgestellt wird, ähnlich der komplexeren Architektur mit einem C0+C1 Filter oder C0-Filter ohne Quantisierung ist.

Um die Verbesserung aufgrund der Verwendung eines mit C0 und zwei-Bit-Quantisierung zu zeigen, werden für diese beiden Fälle in den FIG 4A (C0 ohne Quantisierung) und FIG 4B (C0 mit 2-Bit-Quantisierung) die Mehrweg-Umhüllende gezeigt.

Aus dem Vergleich von FIG.4A und FIG.4B ist ersichtlich, dass die Kurven in FIG.4B früher abklingen. Bei der Verwendung eines zwei-Bit-Quantisierungsfilters hat ein Mehrweg, der 1,25 Chips nach dem Hauptsignal eintrifft, keinerlei Einfluss auf das Tracking. Dies ist nicht der Fall für einen nicht quantisierten Filter. Außerdem sind auch die Größen der Fehler unter Verwendung eines zwei-Bit-Quantisierung-Filters leicht besser.

## Patentansprüche

**1.** Verfahren zum Empfangen eines Signals, wobei das Signal

- komplex und phasenkontinuierlich moduliert ist und
- mit einem empfängergenerierten Signal korreliert wird,

**dadurch gekennzeichnet, dass**

- dem empfangenen Signal ein Pseudo-Zufallscode zugrunde liegt
- dem empfängergenerierten Signal ein Pseudo-Zufallscode zugrunde liegt, und
- die Erzeugung des empfängergenerierten Signals folgende Schritte aufweist
  - Erzeugen der Pseudo-Zufallscodefolge
  - Filtern des Signals mit einem Dekompositionsfilter.

**2.** Verfahren nach Patentanspruch 1, **dadurch gekennzeichnet, dass** das Dekompositionsfilter

- ein Laurent-Dekompositionsfilter ist, und wobei
- nur die Hauptkomponente des Laurent-Dekompositionsfilters verwendet wird.

**3.** Verfahren nach Anspruch 1, **dadurch gekennzeichnet, dass**

- das empfangene Signal aus einem mit einem oder mehreren Bits abgetasteten analogen Signal erzeugt wird.

**4.** Verfahren nach Anspruch 1, **dadurch gekennzeichnet, dass**

- das empfängergenerierte Signal mit einem oder mehreren Bits quantisiert wird.

**5.** Verfahren nach Anspruch 1, **dadurch gekennzeichnet, dass**

- das empfangene Signal zwei voneinander unabhängige Pseudo-Zufallscodes umfasst,
- das empfängergenerierte Signal einen der beiden Pseudo-Zufallscodes umfasst
- das empfängergenerierte Signal im Inphasenkanal oder Quadraturkanal gefiltert wird
- das gefilterte Signal mit dem empfangenen Signal korreliert wird.

**6.** Verfahren nach Anspruch 1, **dadurch gekennzeichnet, dass**

- das empfangene Signal einen ersten Pseudo-Zufallscode-Code und einen vom ersten Pseudo-Zufallscode-Code unabhängigen zweiten Pseudo-Zufallscode-Code umfasst,
- das der Empfänger zusätzlich ein zweites Signal generiert, das einen zweiten Pseudo-Zufallscode umfasst,
- der empfängergenerierte erste und der zweite Pseudo-Zufallscode unabhängig voneinander generiert werden,
- der erste Pseudo-Zufallscode-Code im Inphasenkanal durch ein erstes Dekompositionsfilter gefiltert wird
- der zweite Pseudo-Zufallscode-Code im Quadraturkanal durch ein zweites Dekompositionsfilter gefiltert wird
- der gefilterte erste Pseudo-Zufallscode mit dem empfangenen Signal korreliert wird
- der gefilterte zweite Pseudo-Zufallscode mit dem empfangenen Signal korreliert wird.

**7.** Verfahren nach Anspruch 1, **dadurch gekennzeichnet, dass**

- der Pseudo-Zufallscode mit einem Unterträger moduliert ist
- der empfängergenerierte Pseudo-Zufallscode ebenfalls mit dem Unterträger moduliert wird.

**8.** Verfahren nach Anspruch 1, **dadurch gekennzeichnet dass**

- das empfangene phasenkontinuierliche Signal ein GMSK-Signal ist und mit Datenbits moduliert ist.

**9.** Verfahren nach Anspruch 1, **dadurch gekennzeichnet, dass** das empfangene Signal zu einer der folgenden Signalgruppen zugeordnet werden kann:

- Navigationssignal
- Kommunikationssignal
- Fernsehsignal
- Radiosignal

**10.** Verfahren nach Anspruch 1, **dadurch gekennzeichnet, dass** das empfängergenerierte Signal aus in einem Speicher abgelegten, vordefinierten Werten erzeugt wird.

**11.** Empfänger zum Empfangen von phasenkontinuierlichen Signalen, wobei

- das Empfangssignal auf zwei unabhängigen Eingangssignalen basiert,
- wobei das erste Eingangssignal ein Inphasesignal und das zweite Eingangssignal ein Quadratursignal ist,
- wobei die Eingangssignale jeweils einen Pseudo-Zufallscode umfassen, und wobei

der Empfänger

- eine Empfangseinheit aufweist, um das Empfangssignal zu empfangen

- einen ersten Signalgenerator aufweist, der ein erstes Pseudo-Zufallscode-Codesignal entsprechend einem ersten der beiden Pseudo-Zufallscode-Codes des Empfangssignals erzeugt,
**dadurch gekennzeichnet, dass**

der Empfänger

- einen ersten Dekompositionsfilter aufweist, der das erzeugte erste Pseudo-Zufallscode-Codesignal filtert, und
- eine erste Korrelatoreinheit aufweist, um das gefilterte erste Pseudo-Zufallscodesignal mit dem Empfangssignal zu korrelieren.

**12.** Empfänger nach Anspruch 11, **dadurch gekennzeichnet, dass** der Empfänger einen zweiten Signalgenerator aufweist, der ein zweites Pseudo-Zufallscodesignal entsprechend dem zweiten beiden Pseudo-Zufallscode-Codes des Empfangssignals erzeugt, und wobei
der Empfänger

- einen zweiten Dekompositionsfilter aufweist, der das erzeugte zweite Pseudo-Zufallscodesignal filtert, und
- eine zweite Korrelatoreinheit aufweist, um das gefilterte zweite Pseudo-Zufallscodesignal mit dem Empfangssignal zu korrelieren.

**13.** Empfänger nach Anspruch 11, **dadurch gekennzeichnet, dass**

- die Korrelatoreinheit mindestens einen der folgenden Korrelatorarten umfasst:
- einen Früh-Spät (Early-Late) - Korrelator
- einen Delta-Korrelator
- einen Multi-Korrelator

**14.** Empfänger nach Anspruch 11, **dadurch gekennzeichnet, dass** der Signalgenerator mindestens einen Speicher umfasst, der vordefinierte Signalwerte enthält.

**15.** Empfänger nach Anspruch 11, **dadurch gekennzeichnet, dass** der Empfänger eine Quantisierungseinheit aufweist, um das empfangene Signal mit einem oder mehreren Bits zu quantisieren und/oder eine Quantisierungseinheit aufweist, um das empfängergenerierte Signal mit einem oder mehreren Bits zu quantisieren.

FIG 1

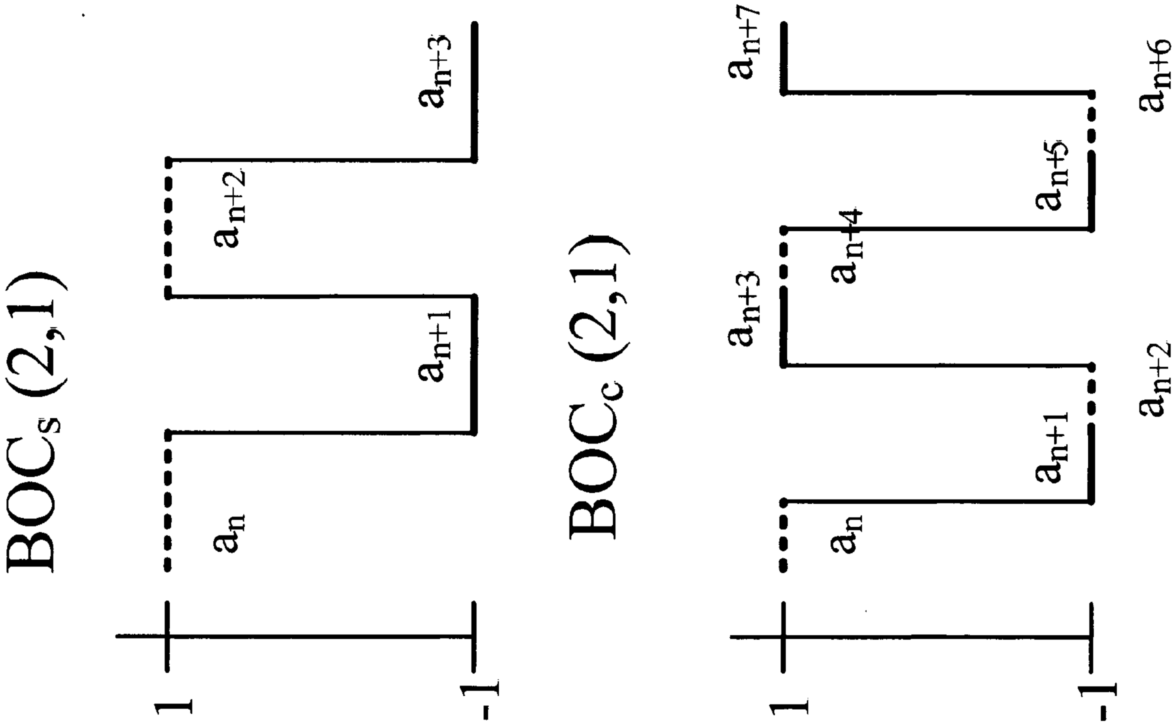

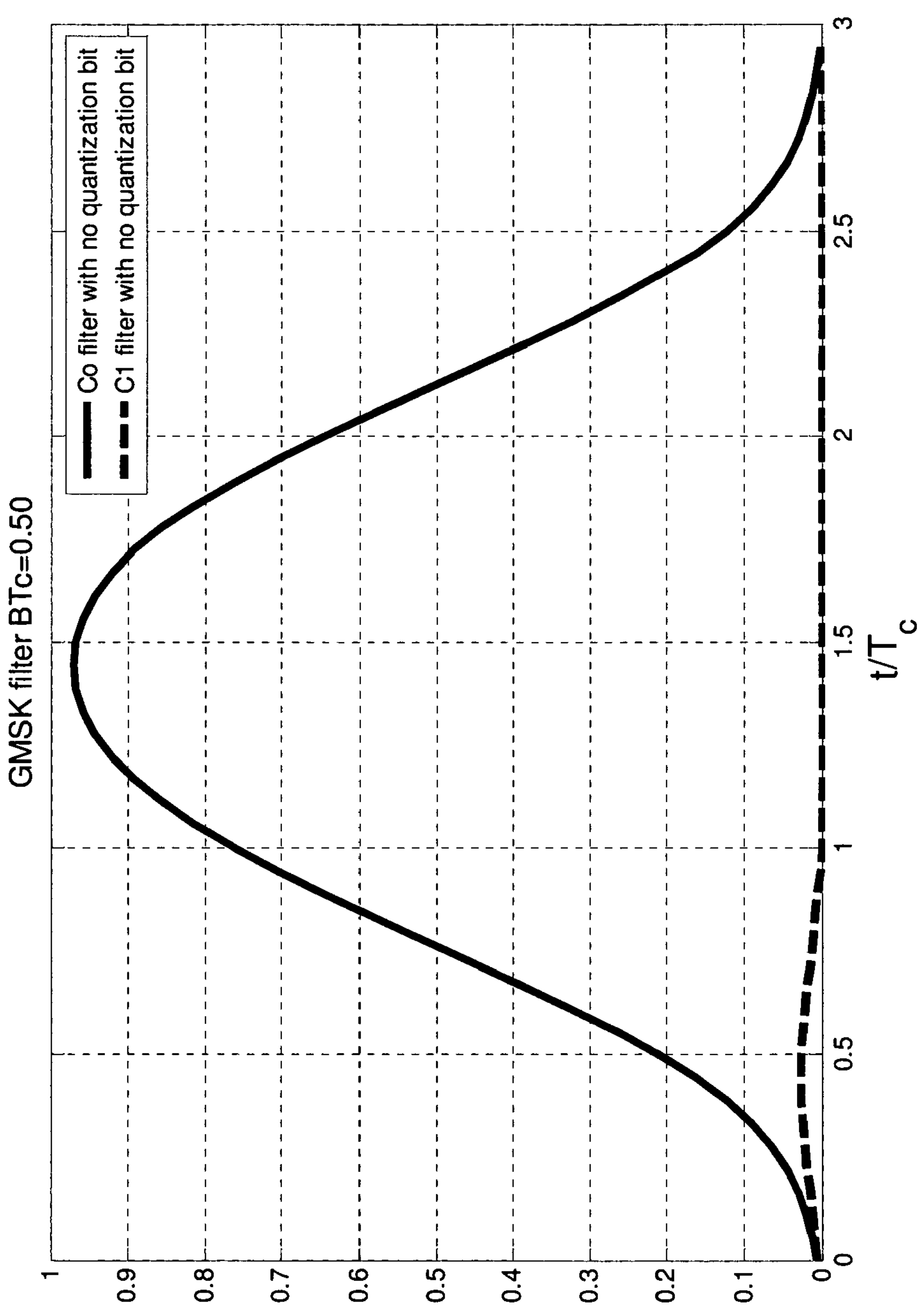
GMSK filter BTc=0.50
Co filter with no quantization bit
C1 filter with no quantization bit
1
0.9
0.8
0.7
0.6
0.5
0.4
0.3
0.2
0.1
0
0
0.5
1
1.5
2
2.5
3
t/T
c

BT=0.5

FIG 2A

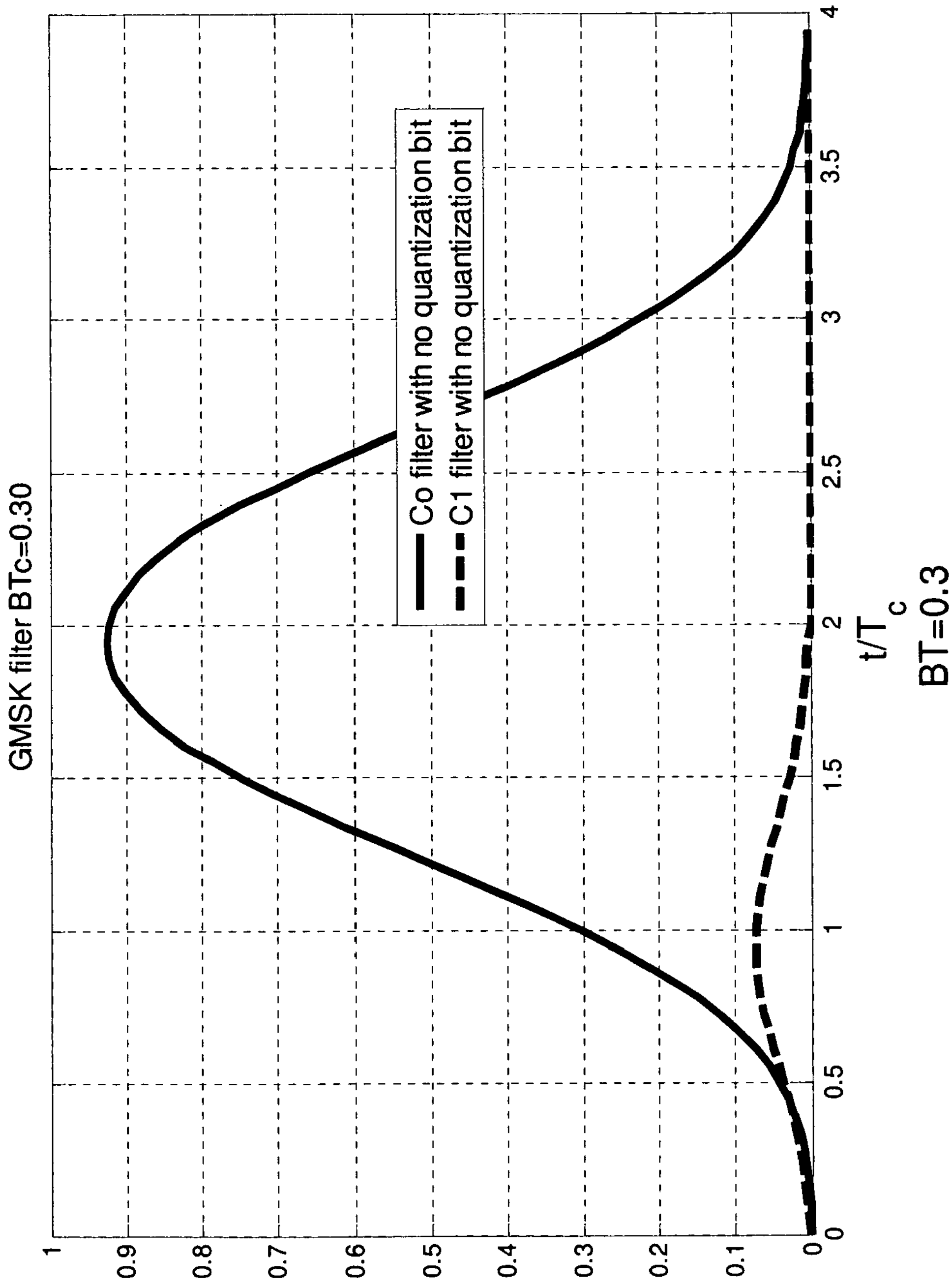
GMSK filter BTc=0.30
Co filter with no quantization bit
C1 filter with no quantization bit
1
0.9
0.8
0.7
0.6
0.5
0.4
0.3
0.2
0.1
0
0
0.5
1
1.5
2
2.5
3
3.5
4
t/T
c
BT=0.3

FIG 2B

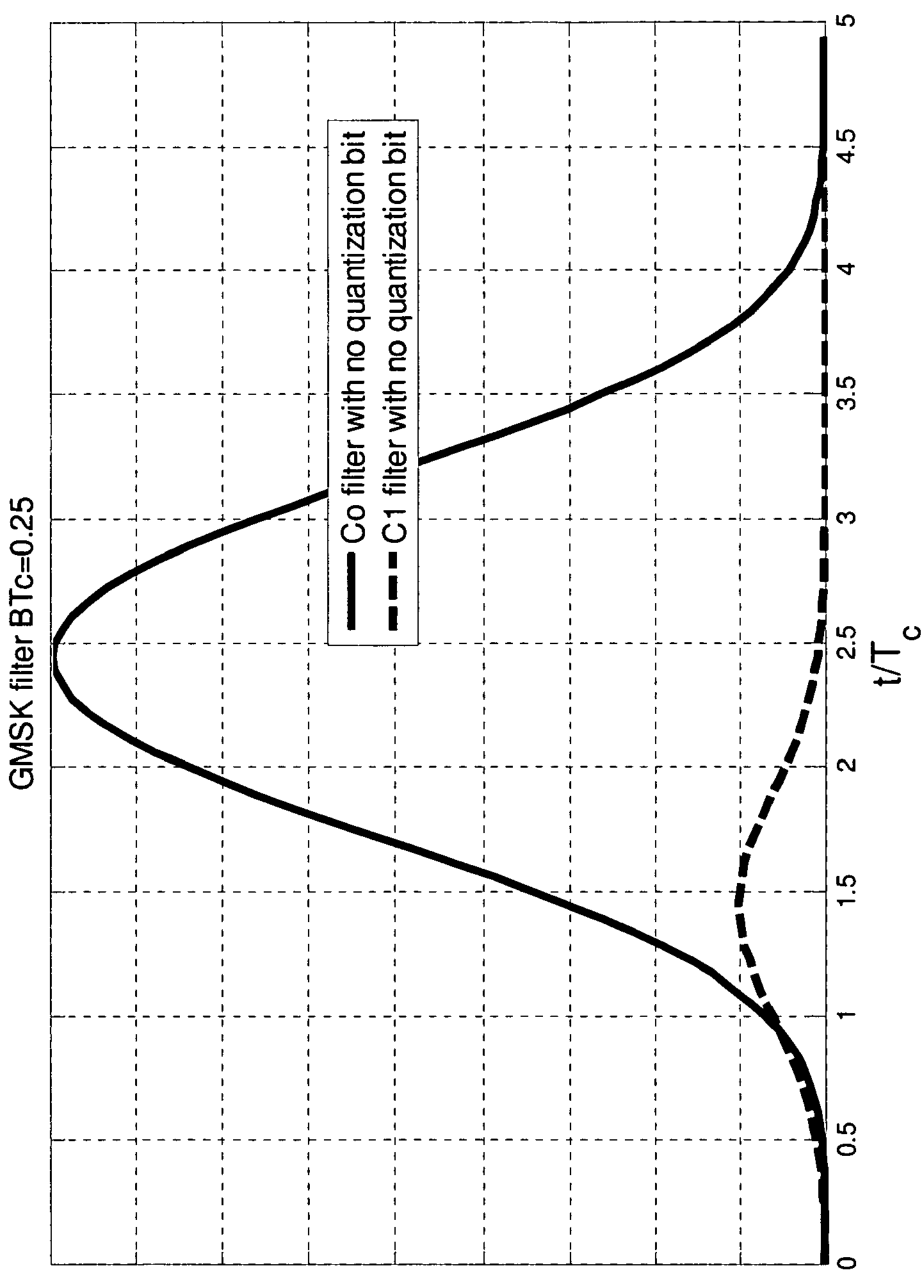
GMSK filter BTc=0.25
Co filter with no quantization bit
C1 filter with no quantization bit
t/T
c
0
0.1
0.2
0.3
0.4
0.5
0.6
0.7
0.8
0.9
0.5
1
1.5
2
2.5
3
3.5
4
4.5
5

BT=0.25

FIG 2C

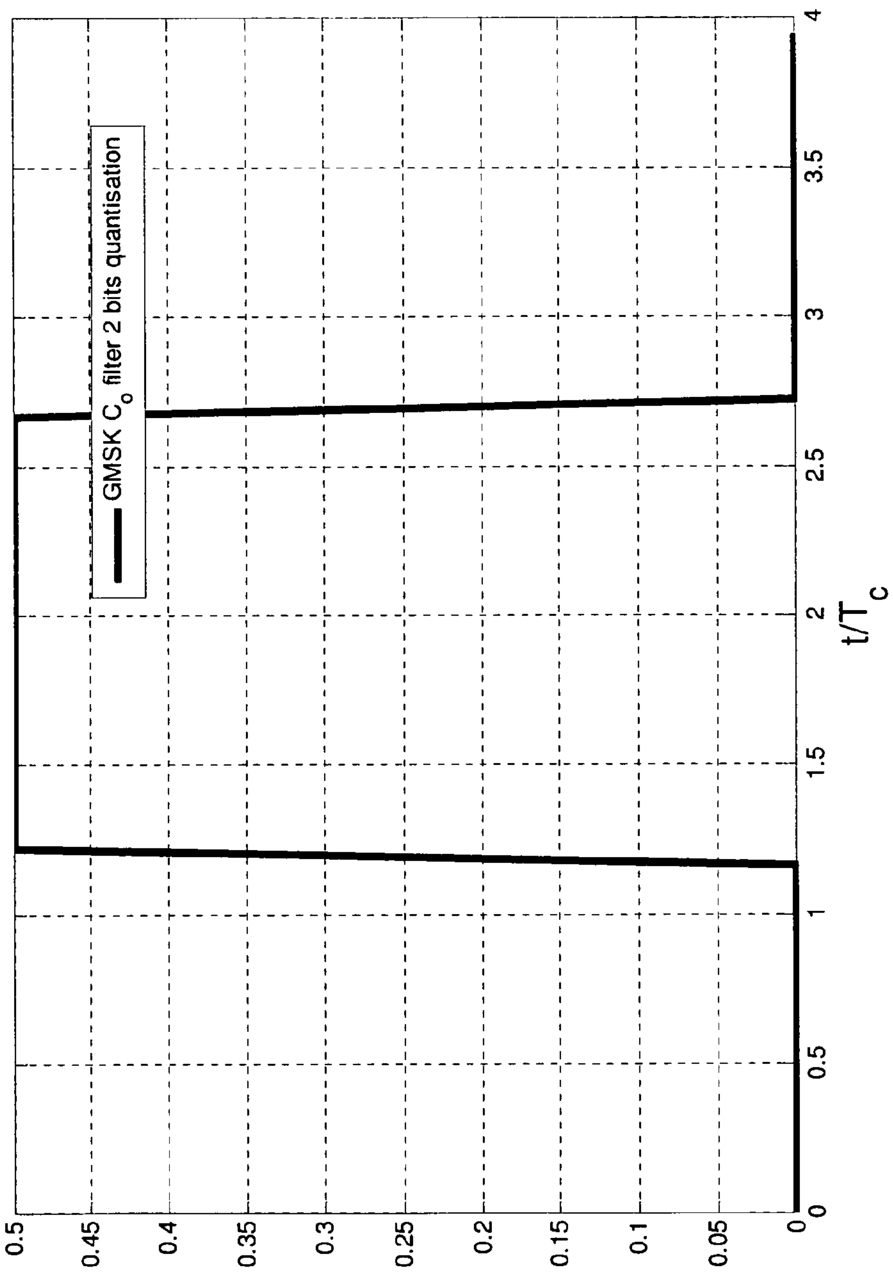
GMSK C
o
filter 2 bits quantisation
0.5
0.45
0.4
0.35
0.3
0.25
0.2
0.15
0.1
0.05
0
0
0.5
1
1.5
2
2.5
3
3.5
4
t/T
c

FIG 3A

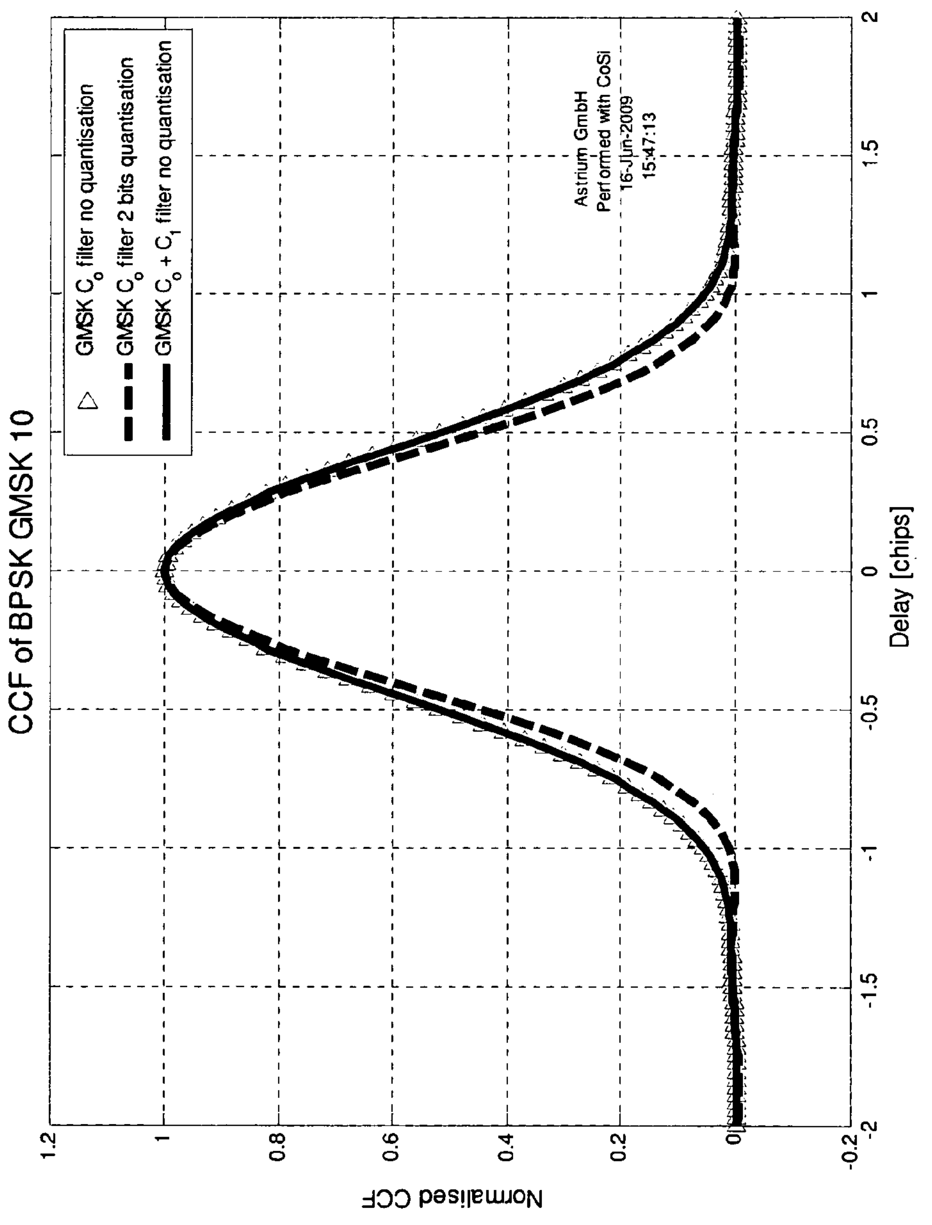
CCF of BPSK GMSK 10
GMSK $C_o$ filter no quantisation
GMSK $C_o$ filter 2 bits quantisation
GMSK $C_o$ + $C_1$ filter no quantisation
Astrium GmbH
Performed with CoSi
16-Jun-2009
15:47:13
Normalised CCF
Delay [chips]
1.2
1
0.8
0.6
0.4
0.2
0
-0.2
-2
-1.5
-1
-0.5
0
0.5
1
1.5
2

FIG 3B

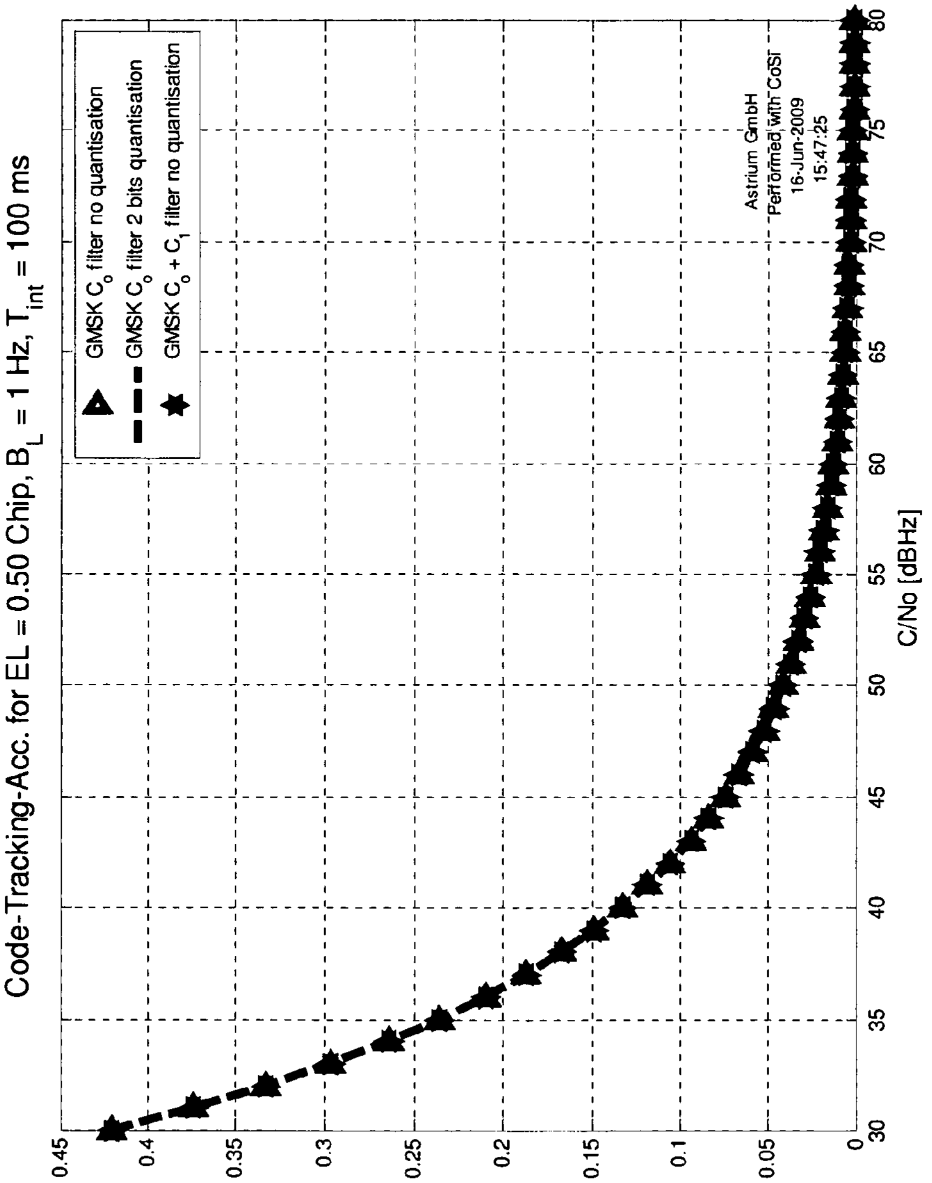
Code-Tracking-Acc. for EL = 0.50 Chip, $B_L$ = 1 Hz, $T_{int}$ = 100 ms
GMSK $C_o$ filter no quantisation
GMSK $C_o$ filter 2 bits quantisation
GMSK $C_o$ + $C_1$ filter no quantisation
Astrium GmbH
Performed with CoSi
16-Jun-2009
15:47:25
[m]
C/No [dBHz]
0.45
0.4
0.35
0.3
0.25
0.2
0.15
0.1
0.05
0
30
35
40
45
50
55
60
65
70
75
80

FIG 3C

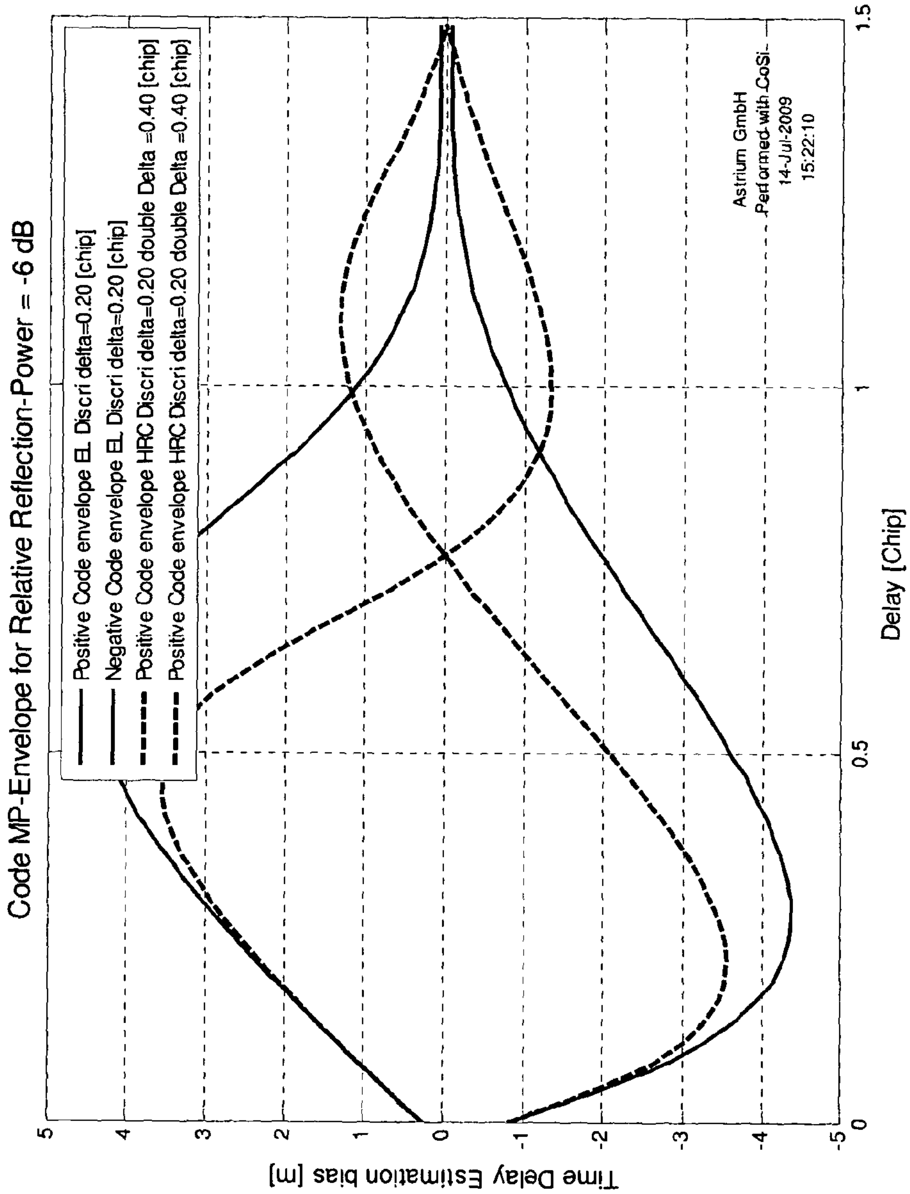
Code MP-Envelope for Relative Reflection-Power = -6 dB
Positive Code envelope EL Discri delta=0.20 [chip]
Negative Code envelope EL Discri delta=0.20 [chip]
Positive Code envelope HRC Discri delta=0.20 double Delta =0.40 [chip]
Positive Code envelope HRC Discri delta=0.20 double Delta =0.40 [chip]
Time Delay Estimation bias [m]
Delay [Chip]
5
4
3
2
1
0
-1
-2
-3
-4
-5
0
0.5
1
1.5
Astrium GmbH
Performed with CoSi
14-Jul-2009
15:22:10

FIG 4A

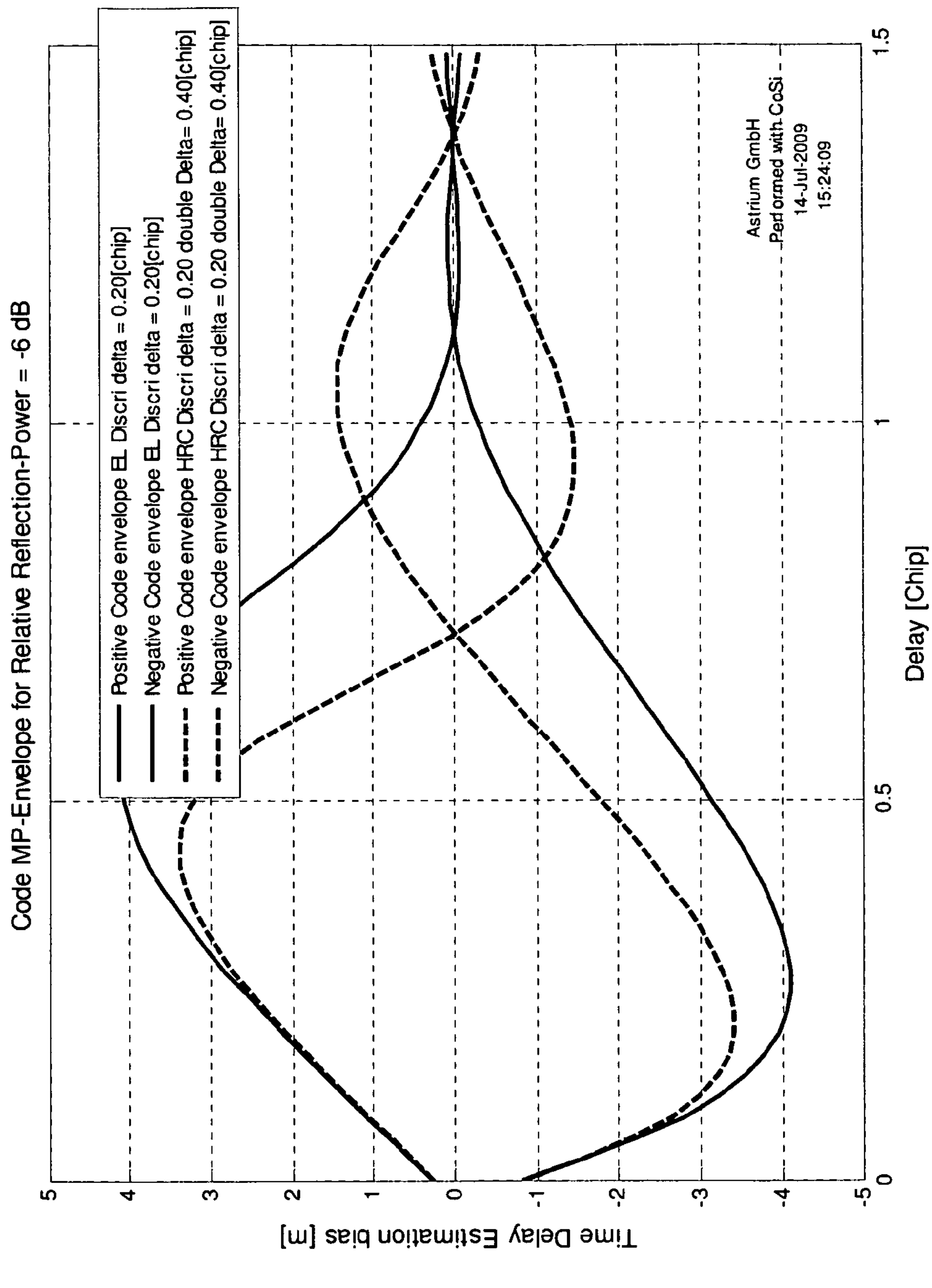
Code MP-Envelope for Relative Reflection-Power = -6 dB
Positive Code envelope EL Discri delta = 0.20[chip]
Negative Code envelope EL Discri delta = 0.20[chip]
Positive Code envelope HRC Discri delta = 0.20 double Delta= 0.40[chip]
Negative Code envelope HRC Discri delta = 0.20 double Delta= 0.40[chip]
Time Delay Estimation bias [m]
5
4
3
2
1
0
-1
-2
-3
-4
-5
0
0.5
1
1.5
Delay [Chip]
Astrium GmbH
Performed with CoSi
14-Jul-2009
15:24:09

FIG 4B

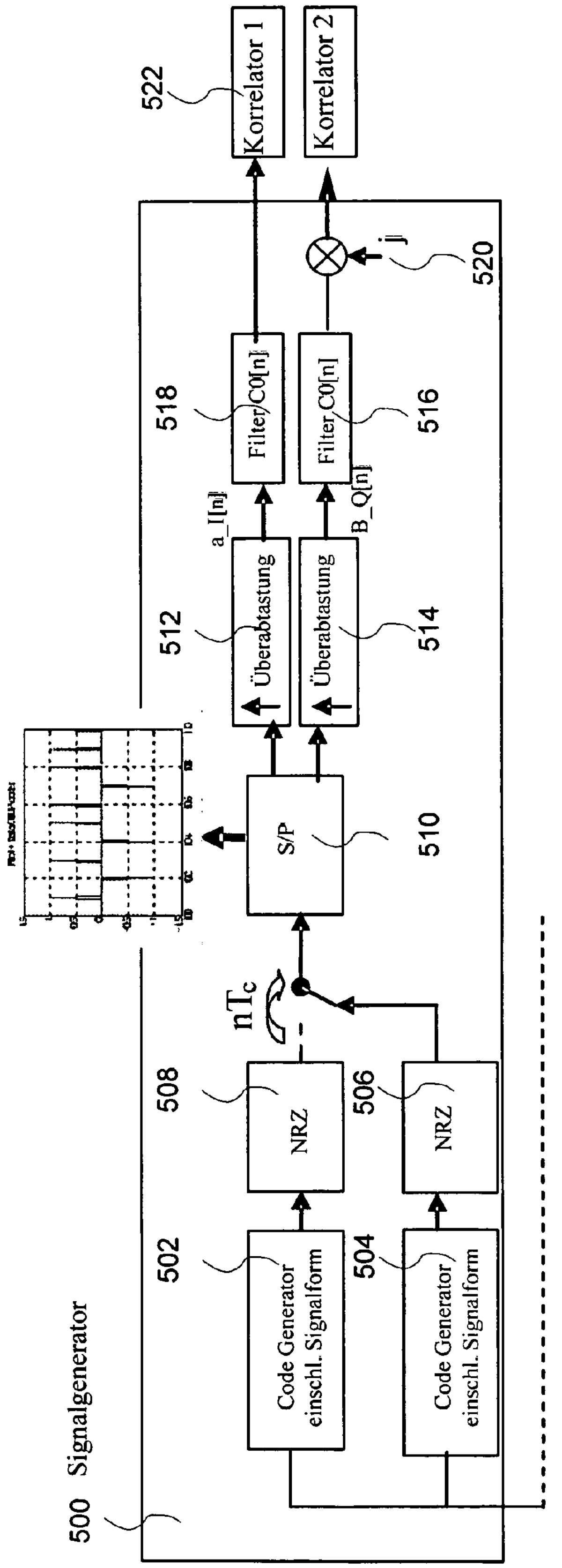
Korrelator 1
Korrelator 2
522
520
j
Filter C0[n]
Filter C0[n]
518
516
a_I[n]
B_Q[n]
Überabtastung
Überabtastung
512
514
S/P
510
nT
NRZ
NRZ
508
506
Code Generator einschl. Signalform
Code Generator einschl. Signalform
502
504
500 Signalgenerator

FIG 5

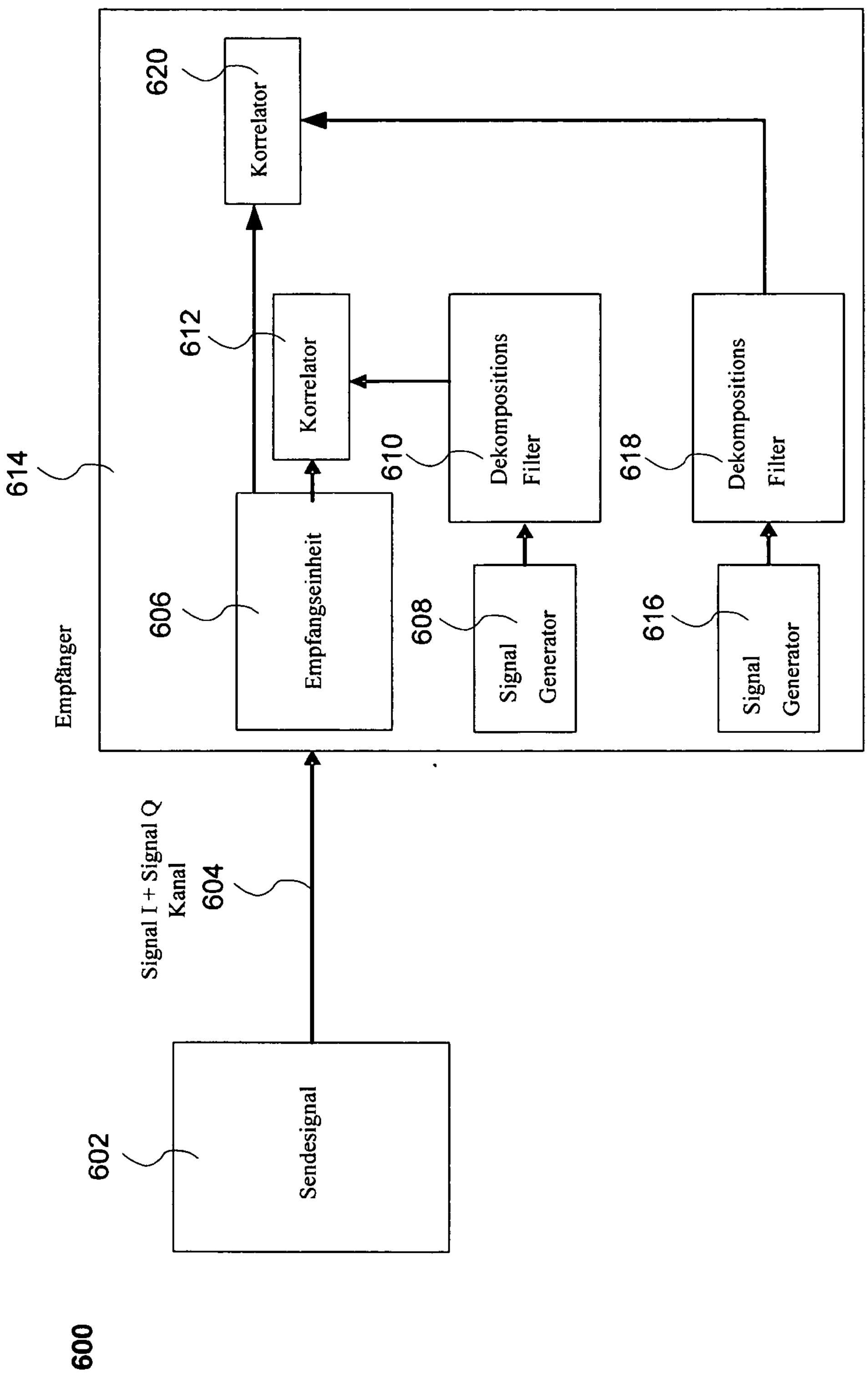

600
602
Sendesignal
Signal I + Signal Q
Kanal
604
614
Empfänger
606
Empfangseinheit
608
Signal
Generator
610
Dekompositions
Filter
612
Korrelator
616
Signal
Generator
618
Dekompositions
Filter
620
Korrelator


FIG 6

Europäisches Patentamt
European Patent Office
Office européen des brevets

# EUROPÄISCHER RECHERCHENBERICHT

Nummer der Anmeldung
EP 10 00 7298

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A | GUNTHER M A SESSLER ET AL: "GMSK Demodulator Implementation for ESA Deep-Space Missions" PROCEEDINGS OF THE IEEE, IEEE. NEW YORK, US LNKD- DOI:10.1109/JPROC.2007.905131, Bd. 95, Nr. 11, 1. November 2007 (2007-11-01), Seiten 2132-2141, XP011197950 ISSN: 0018-9219 * Zusammenfassung * * Abschnitt I,III, IV, V.B, Abbildung 5 * ----- | 1-15 | INV. H04J13/00 H04L25/03 H04L27/20 |
| A | Consultative Committee for Space Data Systems: "BANDWIDTH-EFFICIENT MODULATIONSSUMMARY OF DEFINITION, IMPLEMENTATION, AND PERFORMANCE" CCSDS Secreteriat, Office of Space Communication, National Aeronautics and Space Administration Green Book, Issue 1, REPORT CONCERNING SPACE DATA SYSTEM STANDARDS 1. April 2003 (2003-04-01), XP002607353 Washington DC, USA Gefunden im Internet: URL:http://public.ccsds.org/publications/archive/413x0g1s.pdf [gefunden am 2010-10-27] * Abschnitt 3.1.3, Abbildungen 3-2,3-3,3-9,3-11 * ----- | 1-15 | |
| | | | RECHERCHIERTE SACHGEBIETE (IPC) |
| | | | H04J H04L |

1 Der vorliegende Recherchenbericht wurde für alle Patentansprüche erstellt

| Recherchenort | Abschlußdatum der Recherche | Prüfer |
|---|---|---|
| Den Haag | 28. Oktober 2010 | Nilsson, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)